# EUROPEAN PATENT SPECIFICATION

(11) **EP 4 135 927 B1**
(45) Date of publication and mention of the grant of the patent: **22.05.2024**
(21) Application number: 21721233.1
(22) Date of filing: 09.04.2021
(51) Int. Cl.: B23Q 3/18, B23P 19/00, B23P 19/10, H01L 21/677

(54) **DEVICE AND METHOD FOR MANUFACTURING PRODUCTS**
VORRICHTUNG UND VERFAHREN ZUR HERSTELLUNG VON PRODUKTEN
DISPOSITIF ET PROCÉDÉ DE FABRICATION DE PRODUITS

(30) Priority: 14.04.2020 NL 1043633
(43) Date of publication of application: 22.02.2023
(73) Proprietor: Integrated Mechanization Solutions B.V., 7601 PR Almelo (NL)
(72) Inventor: ROLFF, Gijsbert Johannes Michael, 7622 HE Borne (NL); SPOORENDONK, Wouter Hendrik Cornelis, 7413 AC Deventer (NL); BOUWHUIS, Martijn Johannes, 8107 BN Broekland (NL)
(74) Representative: de Jong, Maurits David
(86) International application number: PCT/NL2021/000003
(87) International publication number: WO 2021/210974

(56) References cited:
- CN-A- 108 296 751

## Description

### Field of the invention

The invention relates to a device for manufacturing products, each product comprising a first component and a second component mutually connected in a determined desired relative position with an accuracy to within less than 50 micrometres. The invention also relates to a method for manufacturing such products.

### Background of the invention

Known is a product comprising two components which are mutually connected, for instance by means of gluing, welding, soldering or connection by means of a laser technique, in a determined desired relative position with a high precision. For manufacture of such a product the two components must, be mutually aligned very accurately and then be secured and fixed in the aligned relative position during mutual connection of the two components. Many examples hereof can be found in patent documents with (IPC/CPC) classification code B23P19/10, for instance CN108296751A.

In a production line for such products the mutual alignment and the securing and fixing in the aligned relative position during the mutual connecting of the two components takes place by means of actuator. During the mutual connecting of the two components the actuator is thus unavailable for mutually aligning a subsequent pair of components of a subsequent product.

If the mutual alignment plus mutual connection, for instance the drying of a glue, takes more time than any of the other processing steps, this production step determines the production time per product. In order to reduce the production time per product this production step must then be multiplied. The costs of purchasing, setting up, using and maintaining the production line however increase here, especially in the case of a relatively expensive actuator, such as an active alignment actuator for mutually aligning the two components with a high accuracy, and the device also takes up more space.

The present invention now provides a solution for the stated problems, and in addition has still more advantages.

### Summary of the invention

The invention provides a device of the stated type, characterized in that the device comprises:
- a plurality of assemblies, each assembly comprising:
   - a first holder configured and suitable for holding a first component;
   - a second holder configured and suitable for holding a second component; and
   - coupling means configured and suitable for mutually coupling the first holder and the second holder such that the first holder and the second holder can move relative to each other within a determined range to a relative position in which a first component held by the first holder and a second component held by the second holder are in the determined desired relative position and the first holder and the second holder can then be temporarily secured and fixed in the relative position;
- a first actuator for moving the first holder and the second holder relative to each other within the determined range to the relative position; and
- connecting means configured and suitable for mutually connecting the first component and the second component in the determined desired relative position.

The invention also provides a method of the stated type, characterized in that the method comprises of:
- holding a first component by means of a first holder provided for this purpose;
- holding a second component by means of a second holder provided for this purpose;
- mutually coupling the first holder and the second holder by means of coupling means provided for this purpose, such that the first holder and the second holder can move relative to each other within a determined range to a relative position in which the first component held by the first holder and the second component held by the second holder are in the determined desired relative position;
- moving the first holder and the second holder relative to each other within the determined range to the relative position by means of a first actuator provided for this purpose;
- temporarily securing and fixing the first holder and the second holder in the relative position by means of the coupling means; and
- mutually connecting the first component and the second component in the determined desired relative position by means of connecting means provided for this purpose.

The first actuator is thus used only for the relative movement of the two holders to the relative position. The coupling means secure and fix the two holders in the relative position during the mutual connecting of the two components. The production time per product can thus be reduced, and the choice of connecting technique can also be expanded.

In the context of the invention 'moving' is understood to mean 'moving with one or more degrees of freedom of movement'. In the context of the invention 'securing and fixing' is understood to mean 'limiting the possibility of movement by one or more degrees of freedom of movement'. The relevant action can optionally take place in steps, per degree of freedom of movement or per multiple degrees of freedom of movement.

### Brief description of the drawings

The invention is further elucidated hereinbelow on the basis of exemplary embodiments. More or less schematically in the drawings:
- figure 1 shows a perspective top view of an assembly forming part of a device according to the invention; and
- figure 2 shows a device and method according to the invention.

### Further elucidation and exemplary embodiments

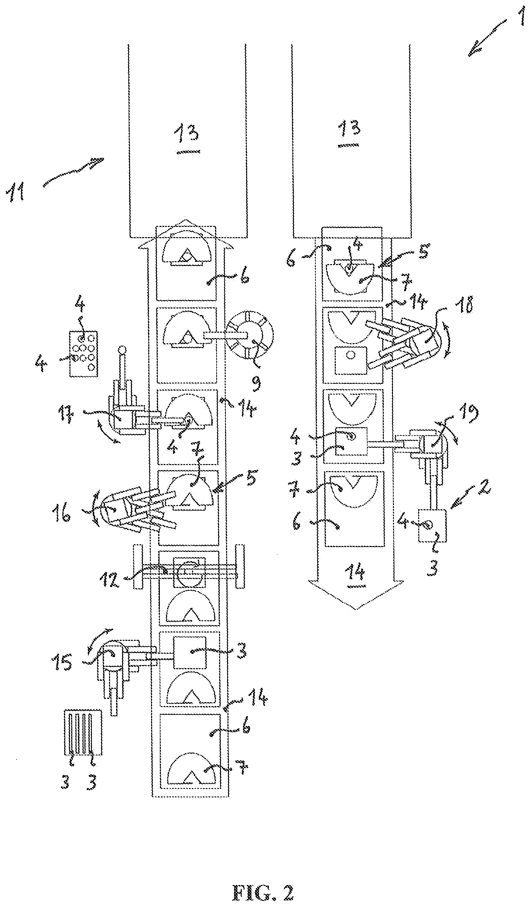

The exemplary embodiment of a device (1) according to the invention shown in figure 2 is here a production line for manufacturing products (2), here micro-cameras, each comprising a first component (3) of an optical nature, here a PCB/image sensor, and a second component (4) of an optical nature, here a lens, mutually connected, here by means of gluing, in a determined desired relative position (A) with an accuracy to within less than 10 micrometres. The production line (1) comprises here a conveyor belt (14) whereby first holders (6) are transported, here in serial and cyclical manner, along a number of workstations. The production line (1) here also comprises a glue dispenser (12) and a workstation (13) for curing the glue, here by heating (oven) or by means of UV light, for the purpose of mutually connecting a PCB/image sensor (3) and a lens (4) in the determined desired relative position (A).

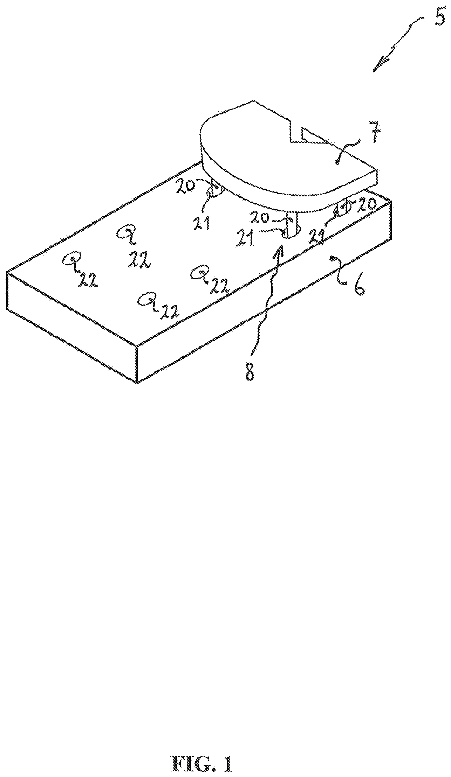

The production line (1) also comprises a number of assemblies (5), each comprising, see figure 1, a first holder (6) for holding a PCB/image sensor, a second holder (7) for holding a lens (4), and coupling means (8), here comprising four coupling members (20), for mutually coupling the first holder (6) and the second holder (7) such that the first holder (6) and the second holder (7) can be mutually aligned within a determined range, i.e. move to a relative position (B) in which a PCB/image sensor (3) held by the first holder (6) and a lens (4) held by the second holder (7) are in the determined desired relative position (A). In other embodiments the coupling means can for instance also be of pneumatic nature, hydraulic nature (cylinders) or otherwise mechanical nature (rod assembly).

The production line (1) also comprises a first actuator (9), here an active alignment actuator for mutual alignment of a first holder (6) and a second holder (7), and thereby a PCB/image sensor (3) and a lens (4). The first holder (6) and the second holder (7) can also be secured and fixed in the relative position (B) by means of the coupling means (8). For this purpose the coupling means (8) here also comprises four securing members (not shown) which can engage on the four coupling members 20 and thus secure and fix them in a determined position. In the given example all four coupling members (20) are secured in the first holder (6) simultaneously by means of the four securing members coupled mechanically to each other for this purpose. In another embodiment this can for instance also be done per coupling member (20) and/or per degree of freedom of movement and/or in a plurality of successive workstations. A first holder (6) and a second holder (7) can thus be mutually aligned and be secured and fixed in the relative position (B), optionally in steps, optionally per degree of freedom of movement, optionally in a plurality of workstations.

The four coupling members (20) are here fixedly connected, each with a first outer end, to a second holder (7). A first holder (6) is here provided with four first receiving spaces (21), each for receiving, here by means of sliding therein, a second outer end of a coupling member (20). The first holder (6) and the second holder (7) can thus be coupled to each other, here releasably, for relative movement within a determined range. The first holder (6) here also comprises four second receiving spaces (22), each once again for receiving, here once again by means of sliding therein, a second outer end of a coupling member (20). The first holder (6) and the second holder (7) can thus be coupled to each other, here once again releasably, in a temporary relative "parked position'.

The exemplary embodiment of a method according to the invention shown schematically in figure 2 comprises the following steps. A PCB/image sensor (3) is placed on a first holder (6) by means of a second actuator (15), on which first holder (6) a second holder (7) is 'parked'. A quantity of glue is then applied to the PCB/image sensor (3) by means of the glue dispenser (12). The second holder (7) is then placed from the 'parked position' onto the first holder (6) by means of a third actuator (16), wherein the second outer ends of the four coupling members (20) slide into the first receiving spaces (21). A lens (4) is then placed on the second holder (7) by means of a fourth actuator (17).

in a subsequent workstation the second holder (7) is aligned (B) relative to the first holder (6) by means of the first actuator (9), and the lens (4) is thereby aligned (A) relative to the PCB/image sensor (3). The securing members are then made to engage on the coupling members (20), such that the holders (6, 7) are secured and fixed in the relative position (B), and the lens (4) and the PCB/image sensor (3) thereby in the determined desired relative position (A). The assembly (5), with the lens (4) and PCB/image sensor (3), is then transported on to the workstation (13) for curing of the glue. The first actuator (9) is then once again available for mutual alignment of a subsequent set of holders (6,7) or lens (4) and PCB/image sensor (3).

After leaving the workstation (13) for curing of the glue, the coupling members (20) are 'released' by the securing members, and the second holder (7) is lifted off the first holder (6) by means of a fifth actuator (18) and 'parked' thereon. The product (2) is then removed from the first holder (6) by means of a sixth actuator (19), after which the first holder (6) with the second holder (7) 'parked' thereon is transported by means of the conveyor belt (14) to the workstation with the second actuator (15) for a subsequent production cycle.

The alignment by the first actuator (9) takes 5 seconds here, the curing of the glue 20 seconds, and each of the remaining production steps less than 5 seconds. In a known serial production line, in which the first actuator (9) is also used for securing and fixing of the two components (3,4) during curing of the glue, the production time per product then amounts to 25 seconds (= the time for the alignment plus the time for curing of the glue). In order to reduce the production time per product the production step comprising the alignment plus the curing of the glue can be multiplied, although a plurality of (expensive) first actuators must then be utilized, which makes the production line and the use and maintenance thereof much more expensive. The device then also takes up more space.

The workstation (13) for curing the glue is now dimensioned here such that four assemblies (5) can be present therein at the same time. By using, as according to the invention, the first actuator (9) only for the relative movement of the two holders (6,7) to the relative position (B), and using the coupling means (8) or the securing members for securing and fixing the holders (6,7) in the relative position (B), during curing of the glue, the production time per product has here been reduced to 5 seconds (= the time for alignment), all this without multiplying and without employing other (expensive) first actuators.

In another embodiment the mutual connecting of the two components can comprise a different connecting technique, for instance welding, soldering or connection by means of a laser technique. Because the connecting is performed spatially separated from the alignment, there are more options for placing the equipment required for the connecting, and the choice of connecting technique is thereby expanded.

According to the invention, an assembly (5) can also comprise an energy buffer (not shown) for storing energy and supplying energy to the coupling means (8) or the securing members, for instance in the form of an electrical accumulator, although the energy buffer can for instance also be of a magnetic nature, pneumatic nature (pressure vessel), hydraulic nature or mechanical nature (spring force). The assembly (5) thus has its own independent energy source, separate from 'the fixed world'.

It will be apparent that the invention is not limited to the given exemplary embodiments but that diverse variants and combinations obvious to a skilled person are possible within the scope of the inventior as defined by the appended claims.

## Claims

1. Device (1) for manufacturing products (2), each product (2) comprising a first component (3) and a second component (4) mutually connected in a determined desired relative position (A) with an accuracy to within less than 50 micrometres, **characterized in that** the device (1) comprises:
- a plurality of assemblies (5), each assembly (5) comprising:
- a first holder (6) configured and suitable for holding a first component (3);
- a second holder (7) configured and suitable for holding a second component (4); and
- coupling means (8) configured and suitable for mutually coupling the first holder (6) and the second holder (7) such that the first holder (6) and the second holder (7) can move relative to each other within a determined range to a relative position (B) in which a first component (3) held by the first holder (6) and a second component (4) held by the second holder (7) are in the determined desired relative position (A) and the first holder (6) and the second holder (7) are temporarily secured and fixed in the relative position (8);
- a first actuator (9) configured and suitable for moving the first holder (6) and the second holder (7) relative to each other within the determined range to the relative position (B); and
- connecting means (11) configured and suitable for mutually connecting the first component (3) and the second component (4) in the determined desired relative position (A).

2. Device (1) according to any one of the foregoing claims, wherein the first holder (6) and the second holder (7) are coupled releasably to each other by means of the coupling means (8).

3. Device according to any one of the foregoing claims, wherein the coupling means (8) are of an electrical, magnetic, pneumatic, hydraulic or mechanical nature.

4. Device (1) according to any one of the foregoing claims, wherein the coupling means (8) comprise at least one coupling member (20).

5. Device (1) according to the foregoing claim, wherein the coupling means (8) also comprise at least one securing member configured and suitable for engaging on the at least one coupling member (20) such that the first holder (6) and the second holder (7) are secured and fixed in the relative position (B).

6. Device (1) according to the foregoing claim, wherein the at least one coupling member (20) is flexible.

7. Device according to claim 5 or 6, wherein the coupling means (8) comprise a plurality of coupling members (20) and the at least one securing member is configured and suitable for simultaneously engaging on the plurality of coupling members (20).

8. Device according to any one of the foregoing claims, wherein each assembly (5) also comprises an energy buffer configured and suitable for storing energy and supplying energy to the coupling means.

9. Device according to the foregoing claim, wherein the energy buffer is of an electrical, magnetic, pneumatic, hydraulic or mechanical nature.

10. Method for manufacturing products (2), each product (2) comprising a first component (3) and a second component (4) mutually connected in a determined desired relative position (A) with an accuracy to within less than 50 micrometres, **characterized in that** the method comprises of:
- holding a first component (3) by means of a first holder (6) provided for this purpose;
- holding a second component (4) by means of a second holder (7) provided for this purpose;
- mutually coupling the first holder (6) and the second holder (7) by means of coupling means (8) provided for this purpose, such that the first holder (6) and the second holder (7) can move relative to each other within a determined range to a relative position (B) in which the first component (3) held by the first holder (6) and the second component (4) held by the second holder (7) are in the determined desired relative position (A);
- moving the first holder (6) and the second holder (7) relative to each other within the determined range to the relative position (B) by means of a first actuator (9) provided for this purpose;
- temporarily securing and fixing the first holder (6) and the second holder (7) in the relative position (B) by means of the coupling means (8); and
- mutually connecting the first component (3) and the second component (4) in the determined desired relative position (A) by means of connecting means (11) provided for this purpose.

11. Method according to claim 10, wherein the coupling means (8) comprise at least one coupling member (20) and also at least one securing member, wherein the method comprises of engaging on the at least one coupling member (20) by means of the at least one securing member such that the first holder (6) and the second holder (7) are secured and fixed in the relative position (B).

12. Method according to claim 11, wherein the coupling means (8) comprise a plurality of coupling members (20), wherein the method comprises of engaging simultaneously on the plurality of coupling members (20) by means of the at least one securing member.

13. Method according to any one of the claims 10-12, wherein the first holder (6), the second holder (7) and the coupling means (8) form part of an assembly (5), which assembly (5) also comprises an energy buffer, wherein the method also comprises of storing energy and supplying energy to the coupling means (8) by means of the energy buffer.

14. Method according to any one of the claims 10-13, wherein the mutual connecting of the first component (3) and the second component (4) in the determined desired relative position (A) comprises of gluing, welding, soldering or connection by means of a laser technique.

## Patentansprüche

1. Vorrichtung (1) zur Herstellung von Produkten (2), wobei jedes Produkt (2) eine erste Komponente (3) und eine zweite Komponente (4) umfasst, die in einer bestimmten gewünschten relativen Position (A) mit einer Genauigkeit von weniger als 50 Mikrometern gegenseitig verbunden sind, **dadurch gekennzeichnet, dass** die Vorrichtung (1) Folgendes umfasst:
- eine Vielzahl von Anordnungen (5), wobei jede Anordnung (5) Folgendes umfasst:
- einen ersten Halter (6), der zum Halten einer ersten Komponente (3) konfiguriert und geeignet ist;
- einen zweiten Halter (7), der zum Halten einer zweiten Komponente (4) konfiguriert und geeignet ist; und
- Kopplungsmittel (8), die zum gegenseitigen Koppeln des ersten Halters (6) und des zweiten Halters (7) konfiguriert und geeignet sind, so dass der erste Halter (6) und der zweite Halter (7) sich relativ zueinander innerhalb eines bestimmten Bereichs zu einer relativen Position (B) bewegen können, in der eine erste Komponente (3), die von dem ersten Halter (6) gehalten wird, und eine zweite Komponente (4), die von dem zweiten Halter (7) gehalten wird, sich in der bestimmten gewünschten relativen Position (A) befinden, und der erste Halter (6) und der zweite Halter (7) vorübergehend gesichert und in der relativen Position (B) fixiert sind;
- einen ersten Aktuator (9), der zum Bewegen des ersten Halters (6) und des zweiten Halters (7) relativ zueinander innerhalb des bestimmten Bereichs in die relative Position (B) konfiguriert und geeignet ist; und
- Verbindungsmittel (11), die zum gegenseitigen Verbinden der ersten Komponente (3) und der zweiten Komponente (4) in der bestimmten gewünschten relativen Position (A) konfiguriert und geeignet sind.

2. Vorrichtung (1) nach einem der vorstehenden Ansprüche, wobei der erste Halter (6) und der zweite Halter (7) mittels der Kopplungsmittel (8) lösbar aneinander gekoppelt sind.

3. Vorrichtung nach einem der vorstehenden Ansprüche, wobei die Kopplungsmittel (8) elektrischer, magnetischer, pneumatischer, hydraulischer oder mechanischer Natur sind.

4. Vorrichtung (1) nach einem der vorstehenden Ansprüche, wobei die Kopplungsmittel (8) mindestens ein Kopplungselement (20) umfassen.

5. Vorrichtung (1) nach dem vorstehenden Anspruch, wobei die Kopplungsmittel (8) auch mindestens ein Sicherungselement umfassen, das zum Eingreifen auf dem mindestens einen Kopplungselement (20) konfiguriert und geeignet ist, so dass der erste Halter (6) und der zweite Halter (7) in der relativen Position (B) gesichert und fixiert sind.

6. Vorrichtung (1) nach dem vorstehenden Anspruch, wobei das mindestens eine Kopplungselement (20) flexibel ist.

7. Vorrichtung nach Anspruch 5 oder 6, wobei die Kopplungsmittel (8) eine Vielzahl von Kopplungselementen (20) umfassen und das mindestens eine Sicherungselement zum gleichzeitigen Eingreifen auf der Vielzahl von Kopplungselementen (20) konfiguriert und geeignet ist.

8. Vorrichtung nach einem der vorstehenden Ansprüche, wobei jede Anordnung (5) auch einen Energiepuffer umfasst, der zum Speichern von Energie und zum Zuführen von Energie zu den Kopplungsmitteln konfiguriert und geeignet ist.

9. Vorrichtung nach dem vorstehenden Anspruch, wobei der Energiepuffer elektrischer, magnetischer, pneumatischer, hydraulischer oder mechanischer Natur ist.

10. Verfahren zur Herstellung von Produkten (2), wobei jedes Produkt (2) eine erste Komponente (3) und eine zweite Komponente (4) umfasst, die in einer bestimmten gewünschten relativen Position (A) mit einer Genauigkeit von weniger als 50 Mikrometern gegenseitig verbunden sind, **dadurch gekennzeichnet, dass** das Verfahren Folgendes umfasst:
- Halten einer ersten Komponente (3) mittels eines ersten für diesen Zweck bereitgestellten Halters (6);
- Halten einer zweiten Komponente (4) mittels eines zweiten für diesen Zweck bereitgestellten Halters (7);
- gegenseitiges Koppeln des ersten Halters (6) und des zweiten Halters (7) mittels für diesen Zweck bereitgestellter Kopplungsmittel (8), so dass der erste Halter (6) und der zweite Halter (7) sich relativ zueinander innerhalb eines bestimmten Bereichs in eine relative Position (B) bewegen können, in der sich die vom ersten Halter (6) gehaltene erste Komponente (3) und die vom zweiten Halter (7) gehaltene zweite Komponente (4) in der bestimmten gewünschten relativen Position (A) befinden;
- Bewegen des ersten Halters (6) und des zweiten Halters (7) relativ zueinander innerhalb des bestimmten Bereichs in die relative Position (B) mittels eines für diesen Zweck bereitgestellten ersten Aktuators (9);
- vorübergehendes Sichern und Fixieren des ersten Halters (6) und des zweiten Halters (7) in der relativen Position (B) mittels der Kopplungsmittel (8); und
- gegenseitiges Verbinden der ersten Komponente (3) und der zweiten Komponente (4) in der bestimmten gewünschten relativen Position (A) mittels für diesen Zweck bereitgestellter Verbindungsmittel (11).

11. Verfahren nach Anspruch 10, wobei die Kopplungsmittel (8) mindestens ein Kopplungselement (20) und auch mindestens ein Sicherungselement umfassen, wobei das Verfahren ein Eingreifen an dem mindestens einen Kopplungselement (20) mittels des mindestens einen Sicherungselements umfasst, so dass der erste Halter (6) und der zweite Halter (7) in der relativen Position (B) gesichert und fixiert sind.

12. Verfahren nach Anspruch 11, wobei die Kopplungsmittel (8) eine Vielzahl von Kopplungselementen (20) umfassen, wobei das Verfahren das gleichzeitige Eingreifen auf der Vielzahl von Kopplungselementen (20) mittels des mindestens einen Sicherungselements umfasst.

13. Verfahren nach einem der Ansprüche 10-12, wobei der erste Halter (6), der zweite Halter (7) und die Kopplungsmittel (8) einen Teil einer Anordnung (5) bilden, wobei die Anordnung (5) auch einen Energiepuffer umfasst, wobei das Verfahren auch das Speichern von Energie und das Zuführen von Energie zu den Kopplungsmitteln (8) mittels des Energiepuffers umfasst.

14. Verfahren nach einem der Ansprüche 10-13, wobei das gegenseitige Verbinden der ersten Komponente (3) und der zweiten Komponente (4) in der bestimmten gewünschten relativen Position (A) Kleben, Schweißen, Löten oder Verbinden mittels einer Lasertechnik umfasst.

## Revendications

1. Dispositif (1) de fabrication de produits (2), chaque produit (2) comprenant un premier composant (3) et un second composant (4) mutuellement raccordés dans une position relative souhaitée déterminée (A) avec une précision inférieure à 50 micromètres, **caractérisé en ce que** le dispositif (1) comprend :
- une pluralité d'ensembles (5), chaque ensemble (5) comprenant :
- un premier support (6) configuré et approprié pour maintenir un premier composant (3) ;
- un second support (7) configuré et approprié pour maintenir un second composant (4) ; et
- des moyens de couplage (8) configurés et appropriés pour coupler mutuellement le premier support (6) et le second support (7) de telle sorte que le premier support (6) et le second support (7) puissent se déplacer l'un par rapport à l'autre dans une plage déterminée jusqu'à une position relative (B) dans laquelle un premier composant (3) maintenu par le premier support (6) et un second composant (4) maintenu par le second support (7) se trouvent dans la position relative souhaitée déterminée (A) et le premier support (6) et le second support (7) sont temporairement sécurisés et fixés dans la position relative (B) ;
- un premier actionneur (9) configuré et approprié pour déplacer le premier support (6) et le second support (7) l'un par rapport à l'autre dans la plage déterminée jusqu'à la position relative (B) ; et
- des moyens de raccordement (11) configurés et appropriés pour raccorder mutuellement le premier composant (3) et le second composant (4) dans la position relative souhaitée déterminée (A).

2. Dispositif (1) selon l'une quelconque des revendications précédentes, dans lequel le premier support (6) et le second support (7) sont couplés de manière amovible l'un à l'autre au moyen des moyens de couplage (8).

3. Dispositif selon l'une quelconque des revendications précédentes, dans lequel les moyens de couplage (8) sont de nature électrique, magnétique, pneumatique, hydraulique ou mécanique.

4. Dispositif (1) selon l'une quelconque des revendications précédentes, dans lequel les moyens de couplage (8) comprennent au moins un élément de couplage (20).

5. Dispositif (1) selon la revendication précédente, dans lequel les moyens de couplage (8) comprennent également au moins un élément de sécurisation configuré et approprié pour venir en prise sur le au moins un élément de couplage (20) de telle sorte que le premier support (6) et le second support (7) soient sécurisés et fixés dans la position relative (B).

6. Dispositif (1) selon la revendication précédente, dans lequel le au moins un élément de couplage (20) est flexible.

7. Dispositif selon la revendication 5 ou 6, dans lequel les moyens de couplage (8) comprennent une pluralité d'éléments de couplage (20) et le au moins un élément de sécurisation est configuré et approprié pour venir en prise simultanément sur la pluralité d'éléments de couplage (20).

8. Dispositif selon l'une quelconque des revendications précédentes, dans lequel chaque ensemble (5) comprend également un tampon d'énergie configuré et approprié pour stocker de l'énergie et fournir de l'énergie aux moyens de couplage.

9. Dispositif selon la revendication précédente, dans lequel le tampon d'énergie est de nature électrique, magnétique, pneumatique, hydraulique ou mécanique.

10. Procédé de fabrication de produits (2), chaque produit (2) comprenant un premier composant (3) et un second composant (4) mutuellement raccordés dans une position relative souhaitée déterminée (A) avec une précision inférieure à 50 micromètres, **caractérisé en ce que** le procédé comprend :
- le maintien d'un premier composant (3) au moyen d'un premier support (6) prévu à cet effet ;
- le maintien d'un second composant (4) au moyen d'un second support (7) prévu à cet effet ;
- le couplage mutuel du premier support (6) et du second support (7) au moyen de moyens de couplage (8) prévus à cet effet, de telle sorte que le premier support (6) et le second support (7) puissent se déplacer l'un par rapport à l'autre dans une plage déterminée jusqu'à une position relative (B) dans laquelle le premier composant (3) maintenu par le premier support (6) et le second composant (4) maintenu par le second support (7) se trouvent dans la position relative souhaitée déterminée (A) ;
- le déplacement du premier support (6) et du second support (7) l'un par rapport à l'autre dans la plage déterminée jusqu'à la position relative (B) au moyen d'un premier actionneur (9) prévu à cet effet ;
- la sécurisation et la fixation temporaires du premier support (6) et du second support (7) dans la position relative (B) au moyen des moyens de couplage (8) ; et
- le raccordement mutuel du premier composant (3) et du second composant (4) dans la position relative souhaitée déterminée (A) au moyen de moyens de raccordement (11) prévus à cet effet.

11. Procédé selon la revendication 10, dans lequel les moyens de couplage (8) comprennent au moins un élément de couplage (20) et également au moins un élément de sécurisation, dans lequel le procédé comprend la mise en prise sur le au moins un élément de couplage (20) au moyen du au moins un élément de sécurisation de telle sorte que le premier support (6) et le second support (7) soient sécurisés et fixés dans la position relative (B).

12. Procédé selon la revendication 11, dans lequel les moyens de couplage (8) comprennent une pluralité d'éléments de couplage (20), dans lequel le procédé comprend la mise en prise simultanée sur la pluralité d'éléments de couplage (20) au moyen du au moins un élément de sécurisation.

13. Procédé selon l'une quelconque des revendications 10-12, dans lequel le premier support (6), le second support (7) et les moyens de couplage (8) font partie d'un ensemble (5), lequel ensemble (5) comprend également un tampon d'énergie, dans lequel le procédé comprend également le stockage d'énergie et la fourniture d'énergie aux moyens de couplage (8) au moyen du tampon d'énergie.

14. Procédé selon l'une quelconque des revendications 10-13, dans lequel le raccordement mutuel du premier composant (3) et du second composant (4) dans la position relative souhaitée déterminée (A) comprend le collage, le soudage, la soudure ou le raccordement au moyen d'une technique laser.
